# EUROPEAN PATENT APPLICATION

(11) **EP 4 395 253 A1**
(43) Date of publication of application: **03.07.2024**
(21) Application number: 22860010.2
(22) Date of filing: 15.06.2022
(51) Int. Cl.: H04L 41/12, H04L 67/1042

(54) **ROUTING METHOD AND APPARATUS, CLOUD RESOURCE REGISTRATION METHOD AND APPARATUS, STORAGE MEDIUM, AND ELECTRONIC APPARATUS**

(30) Priority: 27.08.2021 CN 202110997355
(71) Applicant: ZTE Corporation, Shenzhen, Guangdong 518057 (CN)
(72) Inventor: HUANG, Guangping, Shenzhen, Guangdong 518057 (CN); TAN, Bin, Shenzhen, Guangdong 518057 (CN); PENG, Shaofu, Shenzhen, Guangdong 518057 (CN); GUO, Yong, Shenzhen, Guangdong 518057 (CN); HUANG, Bing, Shenzhen, Guangdong 518057 (CN)
(74) Representative: Deambrogi, Edgardo
(86) International application number: PCT/CN2022/099005
(87) International publication number: WO 2023/024663

(57) **Abstract**

Provided in the embodiments of the present invention are a routing method and apparatus, a cloud resource registering method and apparatus, and a storage medium and an electronic apparatus. The routing method includes: predetermined information carried in a received application data packet is acquired, where the predetermined information includes a cloud resource identifier for processing a cloud resource of application data in the application data packet; information about a cloud node and/or cloud resource instance corresponding to the predetermined information is determined according to a cloud resource identifier routing table, where the cloud resource identifier routing table uses the cloud resource identifier as an index to record the information for providing the cloud node and/or cloud resource instance of the cloud resource identified by the cloud resource identifier; and the application data packet is routed and forwarded according to the determined information about the cloud node and/or cloud resource instance. By means of the present invention, an inter-cloud ubiquitous cloud resource in a network is efficiently addressed and routed, such that a utilization rate of the cloud resource is improved.

## Description

### Technical Field

Embodiments of the present invention relate to the field of communications, and specifically to a routing method and apparatus, a cloud resource registering method and apparatus, and a storage medium and an electronic apparatus.

### Background

A routing and forwarding technology under the current network architecture is essentially an addressing technology oriented to specific physical addresses, and the problem solved thereby is the network transmission of service data between a determined source and a destination node.

However, with the scaled deployment of cloud resources, especially the gradual sinking of the cloud resources in the context of 5G, applications and services are gradually showing a trend of ubiquitous deployment with the cloud resources. Under this new service and traffic model, a network goes from providing efficient and agile interconnection between clouds to ubiquitous interconnection between cloud resources and services thereof, and the traditional network addressing and routing mechanism based on determining physical addresses will face the following challenges.

Cloud services and applications within and between the clouds are highly dynamic.

Distributions of the same resource and service are mostly instantiated, and the physical addresses cannot exactly identify the services.

Addressing routing is not agile enough to sense and arrange the cloud resources and services, and traditional physical address routing efficiency cannot adapt to highly dynamic ubiquitous services and resources.

Through the above analysis, it may be learned that traditional mechanisms for networks to execute routing and forwarding based on specific physical addresses can no longer be adapted to new service and traffic models. As applications and services change with a deployment mode of cloud resources, the use of traditional network routing and forwarding mechanisms leads to a low utilization rate of macro resources, application development and operation and maintenance is becoming more and more complex and costly, in this regard, there is an urgent need to provide appropriate solutions.

### Summary

Embodiments of the present invention provide a routing method and apparatus, a cloud resource registering method and apparatus, and a storage medium and an electronic apparatus, to at least solve the problems in the related art that traditional mechanisms for networks to execute routing and forwarding based on specific physical addresses cannot be adapted to new service and traffic models, leading to a low utilization rate of macro resources, and complex application development and operation and maintenance.

An embodiment of the present invention provides a routing method, which includes: predetermined information carried in a received application data packet is acquired, where the predetermined information includes a cloud resource identifier for processing a cloud resource of application data in the application data packet; information about a cloud node and/or cloud resource instance corresponding to the predetermined information is determined according to a cloud resource identifier routing table, where the cloud resource identifier routing table uses the cloud resource identifier as an index to record the information for providing the cloud node and/or cloud resource instance of the cloud resource identified by the cloud resource identifier; and the application data packet is routed and forwarded according to the determined information about the cloud node and/or cloud resource instance.

An embodiment of the present invention provides a cloud resource registering method, which includes: cloud resource information reported by a cloud resource providing end is received, where the cloud resource information includes: a cloud resource identifier of a cloud resource provided, and information for providing a cloud node and/or cloud resource instance of the cloud resource; and a cloud resource identifier routing table is generated or updated according to the cloud resource information, where the cloud resource identifier routing table uses the cloud resource identifier as an index to record the information for providing the cloud node and/or cloud resource instance of the cloud resource identified by the cloud resource identifier.

Another embodiment of the present invention provides a routing apparatus, which includes: a first determination module, configured to acquire predetermined information carried in a received application data packet, where the predetermined information includes a cloud resource identifier configured to process a cloud resource of application data in the application data packet; a second determination module, configured to determine, according to a cloud resource identifier routing table, information about a cloud node and/or cloud resource instance corresponding to the predetermined information, where the cloud resource identifier routing table uses the cloud resource identifier as an index to record the information for providing the cloud node and/or cloud resource instance of the cloud resource identified by the cloud resource identifier; and a routing and forwarding module, configured to route and forward the application data packet according to the determined information about the cloud node and/or cloud resource instance.

Another embodiment of the present invention provides a cloud resource registering apparatus, which includes: a receiving module, configured to receive cloud resource information reported by a cloud resource providing end, where the cloud resource information includes: a cloud resource identifier of a cloud resource provided, and information for providing a cloud node and/or cloud resource instance of the cloud resource; and a routing table maintenance module, configured to generate or update a cloud resource identifier routing table according to the cloud resource information, where the cloud resource identifier routing table uses the cloud resource identifier as an index to record the information for providing the cloud node and/or cloud resource instance of the cloud resource identified by the cloud resource identifier.

Still another embodiment of the present invention further provides a computer readable storage medium. The computer readable storage medium storing a computer program, wherein the computer program is configured to perform, when executed by a processor, steps in any one of the above method embodiments.

Still another embodiment of the present invention further provides an electronic apparatus. The electronic apparatus includes a memory and a processor, and a computer program that is stored in the memory and executable on the processor, wherein the processor is configured to execute the computer program to perform steps in any one of the above method embodiments.

By means of the above embodiments of the present invention, the application data packet received by a network carries the predetermined information including the cloud resource identifier. The cloud resource identifier can identify the cloud resource processing the application data. The network may determine, according to the cloud resource identifier routing table, the information about the cloud node and/or cloud resource instance corresponding to the predetermined information, such that the routing and forwarding of the application data packet are realized according to the determined information about the cloud node and/or cloud resource instance corresponding to the predetermined information. In this solution, a sending end of the application data packet does not need to specify a target cloud node or cloud resource instance, but only needs to carry the cloud resource identifier of the required cloud resource. The network computes and determines the cloud node and/or cloud resource instance meeting an application requirement, and further performs routing and forwarding on the corresponding application data packet. Compared with a traditional application control and scheduling mode for the cloud resources, this solution creates a new cloud resource control and scheduling mode, and the network completes the control and scheduling of the cloud resources and the routing and forwarding of a data stream, such that the problem, that an application side does not have a good grasp of the state of cloud resources and network conditions and thus is unable to schedule the most suitable cloud resource, leading to a low resource utilization rate, is solved. Furthermore, cloud resource scheduling and configuration operations during development and operation of the application side are also simplified, such that the problem of complex application development and operation and maintenance is solved.

### Brief Description of the Drawings

Fig. 1 is a block diagram of a hardware structure of a network routing and forwarding node of a routing method according to an embodiment of the present invention.
Fig. 2 is a flowchart of a routing method according to an embodiment of the present invention.
Fig. 3 is a flowchart of a routing method applied to a network entry node according to an embodiment of the present invention.
Fig. 4 is a flowchart of a routing method applied to a network exit node according to an embodiment of the present invention.
Fig. 5 is a flowchart of a cloud resource registering method according to an embodiment of the present invention.
Fig. 6 is a structural block diagram of a routing apparatus according to an embodiment of the present invention.
Fig. 7 is a structural block diagram of a cloud resource registering apparatus according to an embodiment of the present invention.
Fig. 8 is a schematic diagram of a routing mechanism and architecture based on resource and service identifiers according to an exemplary embodiment of the present invention.
Fig. 9 is a basic routing and forwarding flowchart based on resource and service identifiers according to Exemplary implementation 1 of the present invention.
Fig. 10 is a schematic structural diagram of resource and service identifiers of a non-IP address structure according to Exemplary implementation 2 of the present invention.
Fig. 11 is a schematic structural diagram of resource and service identifiers of an anycast address structure according to Exemplary implementation 3 of the present invention.

### Detailed Description of the Embodiments

With the scaled deployment of cloud resources, especially the gradual sinking of the cloud resources in the context of 5G, applications and services are gradually showing a trend of ubiquitous deployment with the cloud resources. Traditional solutions for networks to execute routing and forwarding based on specific physical addresses can no longer be adapted to new service and traffic models. Meanwhile, under the requirements of future industrial Internet and various cloud-based application experience and high interactivity, in traditional networks, network and service separation mode based on a best-effort mode also needs to be improved, and application resources and network resources need to be integrated and optimized to meet a final service experience requirement.

The sensing, scheduling, and arrangement of cloud resources and services are currently focused on providing solutions at an application layer, i.e. control and scheduling of specified cloud resources and applications are executed by an application provider based on closed and chimney-style management. The advantage of this mode is that it realizes the decoupling of transmission and routing between an application and a network, providing full flexibility to the application, and the disadvantage is that under an industry trend of ubiquitous computing and storage, this isolated island type resource and service control mode leads to a low macro-resource utilization rate and increasingly complex and costly application development and operation and maintenance.

In order to solve the above problems, embodiments of the present invention provide a routing solution based on a cloud resource identifier and a cloud resource registration solution. In this solution, a sending end of the application data packet does not need to specify a target cloud node or cloud resource instance, but only needs to carry the cloud resource identifier of the required cloud resource. The network computes and determines the cloud node and/or cloud resource instance meeting an application requirement, and further performs routing and forwarding on the corresponding application data packet. Compared with a traditional application control and scheduling mode for the cloud resources, this solution creates a new cloud resource control and scheduling mode, and the network completes the control and scheduling of the cloud resources and the routing and forwarding of a data stream, such that the problem, that an application side does not have a good grasp of the state of cloud resources and network conditions and thus is unable to schedule the most suitable cloud resource, leading to a low resource utilization rate, is solved. Furthermore, cloud resource scheduling and configuration operations during development and operation of the application side are also simplified, such that the problem of complex application development and operation and maintenance is solved.

The embodiments of the present invention are described below in detail with reference to the drawings and the embodiments.

It is to be noted that terms "first", "second" and the like in the description, claims and the above-mentioned drawings of the present invention are used for distinguishing similar objects rather than describing a specific sequence or a precedence order.

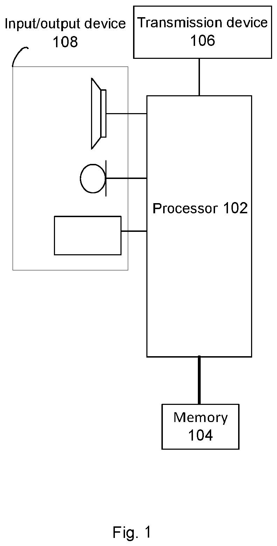

The method embodiment of the routing method provided in the embodiments of the present application may be executed at a network routing and forwarding node (including a network entry node and/or a network exit node) or a similar computing apparatus. The method embodiment of the cloud resource registering method provided in the embodiments of the present application may be executed at a network edge node or a similar computing apparatus. The network routing and forwarding node and the network edge node both are nodes in a network, and hardware structures are all similar to each other. By using operation on the network routing and forwarding node as an example, Fig. 1 is a block diagram of a hardware structure of a network routing and forwarding node of a routing method according to an embodiment of the present invention. As shown in Fig. 1, the network routing and forwarding node may include one or more (only one is shown in Fig. 1) processors 102 (the processor 102 may include, but is not limited to, a processing apparatus such as a microprocessor MCU or a programmable logic device FPGA) and a memory 104 for storing data. The above network routing and forwarding node may further include a transmission device 106 for achieving a communication function and an input/output device 108. Those skilled in the art may understand that the structure shown in Fig. 1 is only schematic, which does not limit the structure of the above network routing and forwarding node. For example, the network routing and forwarding node may further include more or less components than those shown in Fig. 1, or have a different configuration from that shown in Fig. 1.

The memory 104 may be configured to store a computer program, for example, a software program and a module of application software, such as a computer program corresponding to a routing (or cloud resource registering) method in the embodiments of the present invention. The processor 102 operates the computer program stored in the memory 104, so as to execute various functional applications and data processing, that is, to realize the above method. The memory 104 may include a high-speed random access memory, and may further include a non-volatile memory, such as one or more magnetic disk memory apparatuses, a flash memory device, or other non-volatile solid-state memory devices. In some embodiments, the memory 104 may further include memories remotely disposed relative to the processor 102. These remote memories may be connected to the network routing and forwarding node via a network. Examples of the above network include, but are not limited to, the Internet, an intranet, a local area network, a mobile communication network, and a combination thereof.

The transmission apparatus 106 is configured to receive or send data via the network. The specific example of the above network may include a wireless network provided by a communication provider of the network routing and forwarding node. In an example, the transmission apparatus 106 includes a Network Interface Controller (NIC), and may be connected to other network devices by using a base station, so as to communicate with the Internet. In an example, the transmission apparatus 106 is a Radio Frequency (RF) module, which is configured to communicate with the Internet in a wireless manner.

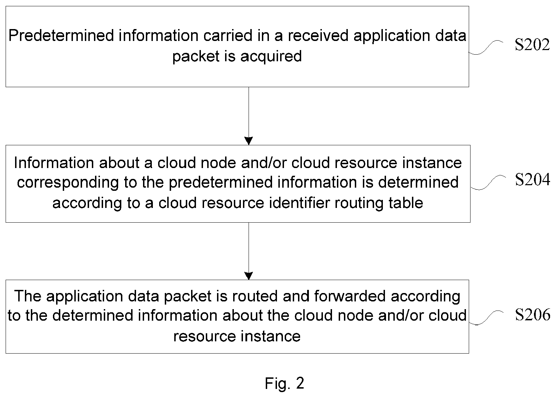

This embodiment provides a routing method operated at the network routing and forwarding node (including a network entry node and/or a network exit node). Fig. 2 is a flowchart of a routing method according to an embodiment of the present invention. As shown in Fig. 2, the flow includes the following steps.

At S202, predetermined information carried in a received application data packet is acquired, and the predetermined information includes a cloud resource identifier for processing a cloud resource of application data in the application data packet.

In this embodiment of the present invention, the cloud resource covers all resources provided through a network. These resources include, but are not limited to, computing, storage, application software, and services, etc., most typically are cloud resources and services.

In the solution, a specific class of cloud resource to be used to process the current application data is indicated by carrying the cloud resource identifiers of the cloud resource of a corresponding class in the application data packet. The cloud resource identifier is used for globally and uniquely identifying a class of cloud resources, and thus can be identified by any network routing and forwarding node in the network. In other words, for a cloud resource identifier corresponding to a specific class of cloud resources, i.e., for the class of cloud resources with which characteristics and constraints, there is the same understanding for the whole network, and the content of this part may be specified, for example, by a standard, or by a uniform specification of the industry.

The class of the cloud resources is generally divided based on a cloud resource attribute; and the cloud resource attribute includes at least one of the following: service categories of the cloud resources, service identifiers of the cloud resources, computing resources included in the cloud resources, storage resources included in the cloud resources, and interface parameters of the cloud resources.

In addition, the cloud resource identifier is independent of the attributions and/or positions of the cloud resources. That is to say, for an application side, although the application side carries the cloud resource identifier in the application data packet, the used cloud resources are not allocated and scheduled, i.e., a specific cloud node or a cloud resource on a cloud resource instance is not specified, but only using a cloud resource identifier independent of the attribution and/or position to indicate which cloud resource these application data specifically need to be processed through. This undoubtedly simplifies cloud resource scheduling and configuration operations during development and operation of the application side, and the problem of complex application development and operation and maintenance is solved.

Definitely, in addition to specifying a certain class of cloud resources, an application may further propose additional requirements for resources, for example, the predetermined information further includes at least one of the following: an aggregation category, support resource attribute, and service parameter of the cloud resource. The predetermined information includes the aggregation category and support resource attribute of the cloud resource, such that a network side can screen the required cloud resources conveniently and more quickly, thereby improving retrieval efficiency of the cloud resource identifier. In addition, requirements for support attributes of required resources can be proposed more accurately. Besides, the service parameter is also sent to the network as optional information included in the predetermined information.

The application data packet is generally sent by a device such as a terminal including an application client. The device may carry the predetermined information in the application data packet in various possible ways. For example, the application data packet may carry the predetermined information in at least one of the following ways.

The predetermined information is encapsulated in a cloud resource identifier sub-layer packet header above a network layer of the application data packet.

The predetermined information is encapsulated in an Internet Protocol version 6 (IPv6) extension packet header of the application data packet.

The predetermined information is encapsulated by extending an IPv6-based Destination Option Header (DOH) packet header of the application data packet.

The predetermined information is programmatically encapsulated by extending an IPv6-based Segment Routing version 6 (SRv6) function of the application data packet.

The predetermined information is encapsulated in a tunnel protocol (Overlay) extension packet header of the application data packet.

The predetermined information is encapsulated in a Multi-Protocol Label Switching (MPLS) extension header of the application data packet.

An anycast address corresponding to the cloud resource identifier is carried in a destination address field of a packet header of the application data packet. The prefix of the anycast address is defined as the cloud resource identifier, or the anycast address corresponds to a unique cloud resource identifier, and a mapping relationship between the anycast address and the cloud resource identifier is globally consistent.

At S204, information about a cloud node and/or cloud resource instance corresponding to the predetermined information is determined according to a cloud resource identifier routing table, and the cloud resource identifier routing table uses the cloud resource identifier as an index to record the information for providing the cloud node and/or cloud resource instance of the cloud resource identified by the cloud resource identifier.

In this embodiment of the present invention, the information about the cloud node may include at least one of the following: a gateway address of the cloud node, and cloud resource state data of the cloud node. That is to say, in the cloud resource identifier routing table, the gateway address for providing the cloud node of the cloud resource indicated by the cloud resource identifier may be recorded, and the state of the cloud resource on the cloud node may also be recorded, for example, whether the cloud resource is busy or idle, application traffics on the cloud resource, etc. Cloud resource state data of the cloud node essentially reflects a use state of the cloud resource on the current cloud node, such that a network may select, according to the information, a relatively-idle cloud node as a cloud node corresponding to the predetermined information.

In this embodiment of the present invention, the information about the cloud resource instance includes at least one of the following: an address of the cloud resource instance, a state of the cloud resource instance, and information of the cloud node to which the cloud resource instance belongs. Since the cloud resource instance may be operated in a virtual machine, a physical host, a container, etc., the address of the cloud resource instance described here may be a virtual machine address, physical host address, a container address, etc. of the cloud resource instance, such that the application data packet may be clarified finally to be sent to which cloud resource instance of which cloud node based on the address of the cloud node to which the cloud resource instance belongs and the address of the cloud resource instance, so as to perform proper routing and forwarding. In addition, the information about the cloud resource instance may further include the state of the cloud resource instance. That is to say, in the cloud resource identifier routing table, the state of the cloud resource instance may be recorded, for example, whether the cloud resource instance is busy or idle, application traffics on the cloud resource instance, etc. The state of the cloud resource instance essentially reflects a use state of the cloud resource on the current cloud resource instance, such that the network may select, according to the information, a relatively-idle cloud resource instance as a cloud resource instance corresponding to the predetermined information.

In this embodiment of the present invention, the cloud resource identifier routing table may be maintained at a network routing and forwarding node, and the network routing and forwarding node includes a network entry node and/or network exit node of the application data packet.

In this embodiment of the present invention, the cloud resource identifier routing table may also be maintained at a network centralized control unit, and synchronizing to the network routing and forwarding node regularly or based on a request. The network routing and forwarding node includes the network entry node and/or network exit node of the application data packet.

In the solution of this embodiment of the present invention, a sending end of the application data packet does not need to specify a target cloud node or cloud resource instance, but only needs to carry the cloud resource identifier of the required cloud resource, and the network computes and determines the cloud node and/or cloud resource instance meeting an application requirement. Since the cloud resource identifier routing table is maintained in the network, all cloud nodes that can provide a corresponding type of cloud resources and registered in the network are grasped, and even how many corresponding cloud resource instances on the cloud node is grasped, such that the network selects the cloud node and/or cloud resource instance for the current application data packet, which has more flexible and broader selection freedom and a larger scheduling range. As a more recommended implementation, the network itself can more accurately grasp a current network topology and a network state to each cloud node. When it is determined that there are a plurality of cloud nodes and/or cloud resource instances that can meet requirements of the predetermined information, one cloud node and/or cloud resource instance (which generally has the optimal network state, and other rules may also be set according to application requirements) may be selected as the cloud node and/or cloud resource instance corresponding to the predetermined information according to the network state to the plurality of cloud nodes and/or cloud resource instances. Definitely, in a practical application, the solution of determining the cloud node and/or cloud resource instance based on the cloud resource identifier routing table and the solution of determining the cloud node and/or cloud resource instance based on the network state may be executed in combination (i.e. both are used as constraints at the same time), and may also be executed progressively (i.e. one determination solution is executed first, and then the other determination solution is executed within a determined result range), and the present invention is not limited thereto. Therefore, the step of determining, according to the cloud resource identifier routing table, the information about the cloud node and/or cloud resource instance corresponding to the predetermined information may include: the information about the cloud node and/or cloud resource instance corresponding to the predetermined information is determined according to the cloud resource identifier routing table and the network state to the plurality of cloud nodes and/or cloud resource instances.

It is to be noted that, based on the method in this embodiment of the present invention, a new cloud resource control and scheduling mode is provided. The control and scheduling of the cloud resource are completed by the network, such that the problem, that an application side cannot schedule the optimal cloud resource due to inadequate grasp of cloud resource states and network conditions, resulting in low resource utilization rate, is solved. Based on such cloud resource control and scheduling mode, a network side may schedule the cloud resources more autonomously and rationally. For the network side, according to the cloud resource identifier routing table, what strategy is used to determine the information about the cloud node and/or cloud resource instance corresponding to the predetermined information may be set by a network operator according to actual requirements. Definitely, an interface may also be provided and set by an application provider. It is to be understood that, when the network grasps all cloud nodes that can provide a corresponding type of cloud resources and registered in the network, and even grasps how many corresponding cloud resource instances on the cloud node, determination strategy of such cloud node and/or cloud resource instance has a broader application range, such that it is easier to find the cloud node and/or cloud resource instance that can meet application requirements and has a better network state. The cloud resource control and scheduling mode of this embodiment of the present invention can support various types of determination strategies of cloud node and/or cloud resource instance, and is not specifically limited.

At S206, the application data packet is routed and forwarded according to the determined information about the cloud node and/or cloud resource instance.

It is to be noted that, in order to achieve continuous processing of applications, it is generally expected that the application data packets of the same application data stream are all sent to the same cloud node and/or cloud resource instance for processing. In order to implement the objective, when the received application data packet is the first application data packet in an application data stream to which the application data packet belongs, in S204, after the information about the cloud node and/or cloud resource instance corresponding to the predetermined information is determined according to the cloud resource identifier routing table, the determined information about the cloud node and/or cloud resource instance may be recorded in a traffic affinity forwarding table. In this way, when the application data packet subsequently received, that is, the received application data packet is not the first application data packet in the application data stream to which the application data packet belongs, S204 may be skipped, and instead, the information about the cloud node and/or cloud resource instance corresponding to the application data stream is directly determined according to the traffic affinity forwarding table, and the application data packet is further routed and forwarded according to the determined information about the cloud node and/or cloud resource instance.

On the basis of an original forwarding and routing function, a function of determining the cloud node and/or cloud resource instance based on the cloud resource identifier routing table is added in the network, and is also called virtual routing function based on the cloud resource identifier, such that logical layering may be performed in the network, which is divided into a cloud resource identifier routing sub-layer and an address routing sub-layer.

Accordingly, the step of the information about the cloud node and/or cloud resource instance corresponding to the predetermined information is determined according to the cloud resource identifier routing table may include: at the cloud resource identifier routing sub-layer, the information about the cloud node and/or cloud resource instance corresponding to the predetermined information is determined according to the cloud resource identifier routing table.

Accordingly, the step of the application data packet is routed and forwarded according to the determined information about the cloud node and/or cloud resource instance may include: at the address routing sub-layer, the application data packet is routed and forwarded according to the determined information about the cloud node and/or cloud resource instance.

It is to be noted that, an execution subject of S202-S206 may be a network routing and forwarding node (including a network entry node and/or a network exit node), and the like, but is not limited thereto.

The following respectively describes the processing when applying the method to the network entry node and the network exit node.

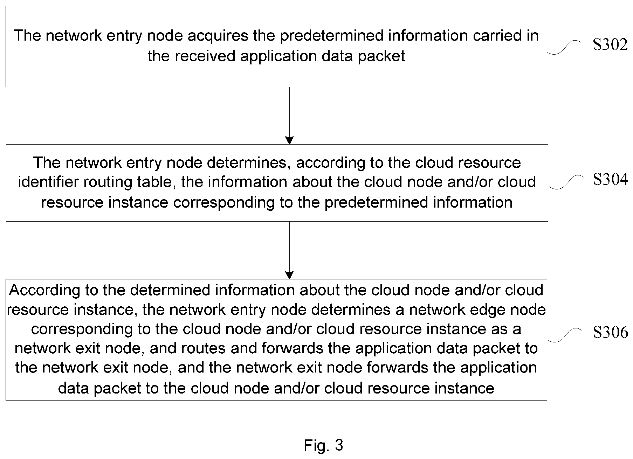

Fig. 3 is a flowchart of a routing method applied to a network entry node according to an embodiment of the present invention. As shown in Fig. 3, when the method is applied to the network entry node, the flow includes the following steps.

At S302, the network entry node acquires the predetermined information carried in the received application data packet.

Considering that the predetermined information may be encapsulated, by a terminal, in an application layer, a transmission layer, and a network layer, or a cloud resource identifier sub-layer above the network layer, the entry node may need to execute packet header analysis of the network layer or the cloud resource identifier sub-layer, or perform deep packet detection of the application layer, such that the predetermined information is acquired from the application data packet.

The step that the network entry node acquires the predetermined information carried in the received application data packet may include at least one of the following.

The network entry node analyzes a packet header to acquire the predetermined information when the predetermined information is encapsulated, at a terminal sending the application data packet, in a network layer packet header of the application data packet or a cloud resource identifier sub-layer packet header above a network layer.

The network entry node deeply detects the application data packet to acquire the predetermined information when the predetermined information is encapsulated, at the terminal sending the application data packet, in the transmission layer under the network layer of the application data packet or an application layer packet header, and encapsulates the predetermined information in the network layer packet header of the application data packet or the cloud resource identifier sub-layer packet header above the network layer.

The network entry node encapsulates the predetermined information in the network layer packet header of the application data packet or the cloud resource identifier sub-layer packet header above the network layer. The packet header here may be an extended definition such as an existing protocol IPv6 extension packet header, may be a cloud resource and service identifier sub-layer above a newly-defined IP layer, and may also be an extended definition of an existing Overlay tunnel protocol packet header, such as Virtual Local Area Network-General Packet Encapsulation (VxLAN-GPE), GENEVE, etc.

At S304, the network entry node determines, according to the cloud resource identifier routing table, the information about the cloud node and/or cloud resource instance corresponding to the predetermined information.

At S306, according to the determined information about the cloud node and/or cloud resource instance, the network entry node determines a network edge node corresponding to the cloud node and/or cloud resource instance as a network exit node, and routes and forwards the application data packet to the network exit node, and the network exit node forwards the application data packet to the cloud node and/or cloud resource instance.

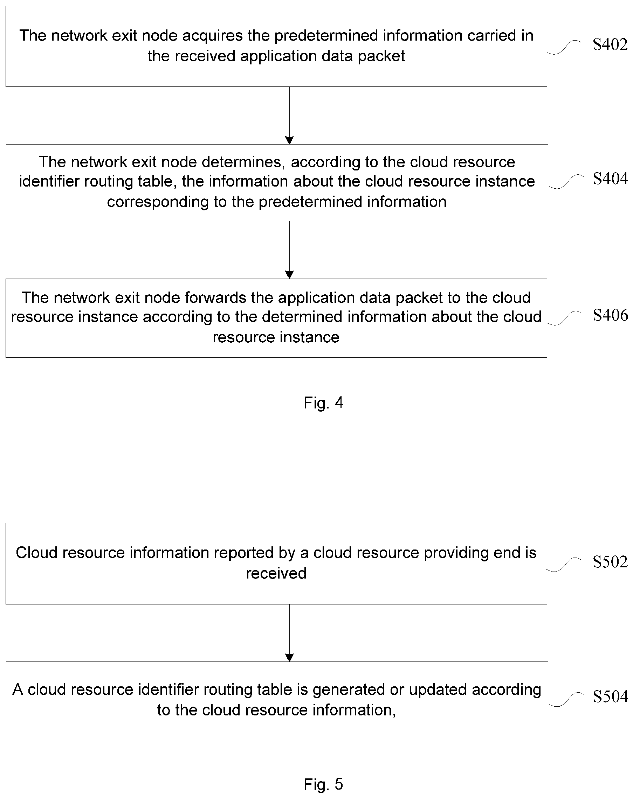

Fig. 4 is a flowchart of a routing method applied to a network exit node according to an embodiment of the present invention. As shown in Fig. 4, when the method is applied to the network exit node, the flow includes the following steps.

At S402, the network exit node acquires the predetermined information carried in the received application data packet.

Considering that the predetermined information has been encapsulated, by the terminal, in the network layer or the cloud resource identifier sub-layer packet header above the network layer, or the network entry node has encapsulated the predetermined information that is analyzed through deep packet detection by itself in the network layer or the cloud resource identifier sub-layer packet header above the network layer, the exit node only needs to execute packet header analysis of the network layer or the cloud resource identifier sub-layer.

Therefore, the step that the network exit node acquires the predetermined information carried in the received application data packet may include the following.

The network exit node analyzes the network layer packet header of the application data packet or the cloud resource identifier sub-layer packet header above the network layer to acquire the predetermined information.

At S404, the network exit node determines, according to the cloud resource identifier routing table, the information about the cloud resource instance corresponding to the predetermined information.

At S406, the network exit node forwards the application data packet to the cloud resource instance according to the determined information about the cloud resource instance.

To sum up, by means of the routing solution in this embodiment of the present invention, the application data packet received by the network carries the predetermined information including the cloud resource identifier. The cloud resource identifier can identify the cloud resource processing the application data. The network may determine, according to the cloud resource identifier routing table, the information about the cloud node and/or cloud resource instance corresponding to the predetermined information, such that the routing and forwarding of the application data packet are realized according to the determined information about the cloud node and/or cloud resource instance corresponding to the predetermined information. In this solution, a sending end of the application data packet does not need to specify a target cloud node or cloud resource instance, but only needs to carry the cloud resource identifier of the required cloud resource. The network computes and determines the cloud node and/or cloud resource instance meeting an application requirement, and further performs routing and forwarding on the corresponding application data packet. Compared with a traditional application control and scheduling mode for the cloud resources, this solution creates a new cloud resource control and scheduling mode, and the network completes the control and scheduling of the cloud resources and the routing and forwarding of a data stream, such that the problem, that an application side does not have a good grasp of the state of cloud resources and network conditions and thus is unable to schedule the most suitable cloud resource, leading to a low resource utilization rate, is solved. Furthermore, cloud resource scheduling and configuration operations during development and operation of the application side are also simplified, such that the problem of complex application development and operation and maintenance is solved.

From the above descriptions about the implementation modes, those skilled in the art may clearly know that the method according to the foregoing embodiments may be implemented in a manner of combining software and a necessary universal hardware platform, and of course, may also be implemented through hardware, but the former is a preferred implementation mode under many circumstances. Based on such an understanding, the technical solutions of the present invention substantially or parts making contributions to the conventional art may be embodied in form of software product, and the computer software product is stored in a storage medium (for example, a ROM/RAM), a magnetic disk and an optical disk), including a plurality of instructions configured to enable a terminal device (which may be a mobile phone, a computer, a server, a network device, or the like) to execute the method in each embodiment of the present invention.

The network needs to maintain the cloud resource identifier routing table in real time, such that the information about the cloud node and/or cloud resource instance corresponding to the predetermined information can be determined according to the predetermined information that includes the cloud resource identifier and is carried in the application data packet. The cloud resource identifier routing table uses the cloud resource identifier as an index to record the information for providing the cloud node and/or cloud resource instance of the cloud resource identified by the cloud resource identifier. Considering that there are many cloud resource providers, and the cloud nodes that can provide the cloud resources, as well as the types of cloud resources that can be provided, may change at any time, this requires the network to be able to accept the registration of cloud resources by the cloud resource providers, and to maintain the corresponding cloud resource identifier routing tables. For this purpose, this embodiment provides a cloud resource registering method operated at a network edge node. Fig. 5 is a flowchart of a cloud resource registering method according to an embodiment of the present invention. As shown in Fig. 5, the flow includes the following steps.

At S502, cloud resource information reported by a cloud resource providing end is received, and the cloud resource information includes: a cloud resource identifier of a cloud resource provided, and information for providing a cloud node and/or cloud resource instance of the cloud resource.

At S504, a cloud resource identifier routing table is generated or updated according to the cloud resource information, and the cloud resource identifier routing table uses the cloud resource identifier as an index to record the information for providing the cloud node and/or cloud resource instance of the cloud resource identified by the cloud resource identifier.

Definitely, the network side should also accept the deletion of the cloud node and/or cloud resource instance, and then the flow further includes the following steps.

A cloud resource deletion request reported by the cloud resource providing end is received. The cloud resource deletion request includes: a cloud resource identifier of a cloud resource to be deleted, and information about a cloud node and/or cloud resource instance of the cloud resource to be deleted.

The cloud resource identifier routing table is updated according to the cloud resource deletion request.

Considering that, in this embodiment of the present invention, the cloud resource identifier routing table may be maintained at a network centralized control unit or a network routing and forwarding node, the network edge node may report the cloud resource identifier routing table to the network centralized control unit; and/or the cloud resource identifier routing table is flooded between the network routing and forwarding nodes.

By means of the solution, the network can accept the registration of the cloud resource by the cloud resource provider, and correspondingly maintain the cloud resource identifier routing table, such that the network may determine, according to the cloud resource identifier routing table, the information about the cloud node and/or cloud resource instance corresponding to the predetermined information after the application data packet received by the network carries the predetermined information including the cloud resource identifier, thereby realizing the routing and forwarding of the application data packet according to the determined information about the cloud node and/or cloud resource instance corresponding to the predetermined information. The solution provides a basic support for a new cloud resource control and scheduling mode, making it possible for the network to control and schedule the cloud resource, such that the problem, that an application side cannot schedule the optimal cloud resource due to inadequate grasp of cloud resource states and network conditions, resulting in low resource utilization rate, is solved. In addition, cloud resource scheduling and configuration operations during development and operation of the application side are also simplified, such that the problem of complex application development and operation and maintenance is solved.

From the above descriptions about the implementation modes, those skilled in the art may clearly know that the method according to the foregoing embodiments may be implemented in a manner of combining software and a necessary universal hardware platform, and of course, may also be implemented through hardware, but the former is a preferred implementation mode under many circumstances. Based on such an understanding, the technical solutions of the present invention substantially or parts making contributions to the conventional art may be embodied in form of software product, and the computer software product is stored in a storage medium (for example, a ROM/RAM), a magnetic disk and an optical disk), including a plurality of instructions configured to enable a terminal device (which may be a mobile phone, a computer, a server, a network device, or the like) to execute the method in each embodiment of the present invention.

This embodiment further provides a routing apparatus. The apparatus is configured to implement the foregoing embodiments and the preferred implementation, and what has been described will not be described again. As used below, the term "module" may be a combination of software and/or hardware that implements a predetermined function. Although the apparatus described in the following embodiments is preferably implemented in software, but implementations in hardware, or a combination of software and hardware, are also possible and conceived.

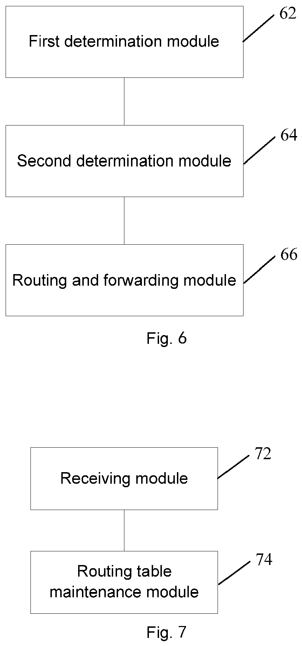

Fig. 6 is a structural block diagram of a routing apparatus according to an embodiment of the present invention. As shown in Fig. 6, the apparatus includes a first determination module, a second determination module, and a routing and forwarding module.

The first determination module 62, is configured to acquire predetermined information carried in a received application data packet. The predetermined information includes a cloud resource identifier configured to process a cloud resource of application data in the application data packet.

The second determination module 64, is configured to determine, according to a cloud resource identifier routing table, information about a cloud node and/or cloud resource instance corresponding to the predetermined information. The cloud resource identifier routing table uses the cloud resource identifier as an index to record the information for providing the cloud node and/or cloud resource instance of the cloud resource identified by the cloud resource identifier.

The routing and forwarding module 66, is configured to route and forward the application data packet according to the determined information about the cloud node and/or cloud resource instance.

The routing apparatus may be configured at a network routing and forwarding node.

For specific examples in this embodiment, refer to the examples described in the foregoing embodiments and the exemplary implementations, and this embodiment will not be repeated thereto.

It is to be noted that, each of the above modules may be implemented by software or hardware. For the latter, it may be implemented in the following manners, but is not limited to the follow: the above modules are all located in a same processor; or the above modules are located in different processors in any combination.

This embodiment further provides a cloud resource registering apparatus. The apparatus is configured to implement the foregoing embodiments and the preferred implementation, and what has been described will not be described again. As used below, the term "module" may be a combination of software and/or hardware that implements a predetermined function. Although the apparatus described in the following embodiments is preferably implemented in software, but implementations in hardware, or a combination of software and hardware, are also possible and conceived.

Fig. 7 is a structural block diagram of a cloud resource registering apparatus according to an embodiment of the present invention. As shown in Fig. 7, the apparatus includes a receiving module and a routing table maintenance module.

The receiving module 72, is configured to receive cloud resource information reported by a cloud resource providing end. The cloud resource information includes: a cloud resource identifier of a cloud resource provided, and information for providing a cloud node and/or cloud resource instance of the cloud resource.

The routing table maintenance module 74, is configured to generate or update a cloud resource identifier routing table according to the cloud resource information. The cloud resource identifier routing table uses the cloud resource identifier as an index to record the information for providing the cloud node and/or cloud resource instance of the cloud resource identified by the cloud resource identifier.

The cloud resource registering apparatus may be disposed at a network edge node, which is sometimes used as the network routing and forwarding node.

For specific examples in this embodiment, refer to the examples described in the foregoing embodiments and the exemplary implementations, and this embodiment will not be repeated thereto.

It is to be noted that, each of the above modules may be implemented by software or hardware. For the latter, it may be implemented in the following manners, but is not limited to the follow: the above modules are all located in a same processor; or the above modules are located in different processors in any combination.

An embodiment of the present invention further provides a computer readable storage medium. The computer readable storage medium storing a computer program. Wherein the computer program is configured to perform, when executed by a processor, steps in any one of the above method embodiments.

In an exemplary embodiment, the computer readable storage medium may include, but is not limited to, a USB flash disk, a Read-Only Memory (ROM), a Random Access Memory (RAM), and various media that can store computer programs, such as a mobile hard disk, a magnetic disk, or an optical disk.

An embodiment of the present invention further provides an electronic apparatus. The electronic apparatus includes a memory and a processor. The memory is configured to store a computer program. The processor is configured to operate the computer program to execute steps in any one of method embodiments described above.

In an exemplary embodiment, the electronic apparatus may further include a transmission device and an input/output device. The transmission device is connected to the processor. The input/output device is connected to the processor.

For specific examples in this embodiment, refer to the examples described in the foregoing embodiments and the exemplary implementations, and this embodiment will not be repeated thereto.

The routing method and the cloud resource registering method of the embodiments of the present invention are described in detail below by taking the cloud resources as resources and services and the cloud resource identifiers as resource and service identifiers as an example. It is to be noted that, the following exemplary embodiments are only intended to facilitate the understanding of the solution and should not be construed as limiting the present invention.

In the solution of the following exemplary embodiments, the resource and service identifiers independent of attribution and position is introduced in a traditional network routing and forwarding layer, and a resource and service identifier virtual routing mechanism decoupling from traditional routing and forwarding is introduced. In addition, it is to be noted that, the solution of this exemplary embodiment is easy to expand and upgrade while enhancing the discovery and routing capabilities of the network for ubiquitous services and resources, with no changes or update requirements to existing network routing algorithms and protocols.

This exemplary embodiment provides a routing technology method and flow based on a resource and service identifier. Several key points of solution implementation are described below.
1. Definition of resource and service identifier.

A resource and service identifier is introduced in a network routing and forwarding layer, the following attributes of cloud services and resources are defined based on the identifier:
(1) service categories, including aggregated broad categories, or service categories established in accordance with conventional category classification criteria of the industry, such as video processing, Al algorithms, etc.;
(2) service names, common service identifiers with global semantics, such as video rendering algorithms, Fourier transform algorithms, etc.;
(3) (optional) computing and storage resources required for supporting services, such as GPUs, CPUs, etc.; and
(4) (optional) interface parameters required by the services.

Therefore, the above resource and service identifier does not have a resource and service attribution semantic, nor does it have a resource and service node position semantic. Compared with a traditional routing and forwarding address, the abstract semantics of the resource and service identifier is more adapted to the future sensing and scheduling of ubiquitous services and resources.

2. Resource and service identifier routing mechanism.

The identifier is introduced in the network routing and forwarding layer, a control plane maintains a service and resource state routing table using the identifier as an index, i.e., the cloud side notifies or registers the described resource and service state provided thereby to the network edge node, and the network creates a resource and service routing table based on this.

The device control plane generates a corresponding forwarding table based on the resource and service routing table, and the forwarding of service data is completed by an existing routing and forwarding mechanism.

3. Relationship between resource and service identifier and existing routing mechanism.

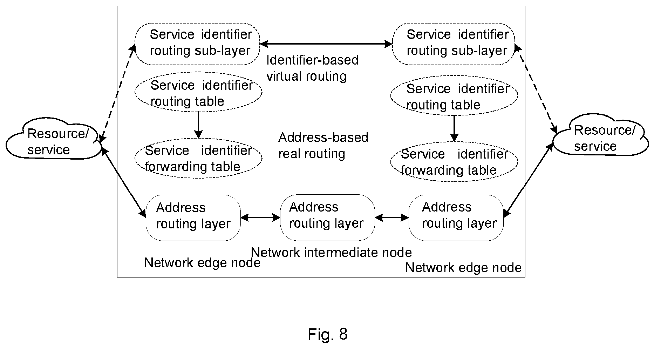

The cloud side resource and service node is decoupled from a routing and forwarding network in network deployment, i.e., for the routing and forwarding network, the cloud side resource and service node is only an application-level routing ultimate node, which has no impact on the current network routing topology and routing algorithms. Therefore, resource and service identifier routing is essentially a service and network dual Service Level Agreement (SLA) decoupled and optimized routing mechanism. The resource and service identifier routing is only executed by primary cloud node virtual routing, and the forwarding and routing of actual service data is still executed by a traditional routing mechanism. Fig. 8 is a schematic diagram of a routing mechanism and architecture based on resource and service identifiers according to an exemplary embodiment of the present invention. As shown in Fig. 8, a service identifier routing sub-layer (equivalent to the foregoing cloud resource identifier routing sub-layer) only executes inter-cloud resource and service sensing and routing, i.e., according to the resource and service routing state table, a cloud service node meeting an application request and a corresponding network edge node thereof are found, and an address routing layer (equivalent to the foregoing address routing sub-layer) performs actual path arrangement based on this. Therefore, a virtual routing sub-layer based on service identifier is introduced to execute efficient addressing routing of inter-cloud ubiquitous services and resources, and maintains a decoupling relationship with a traditional address-based routing and forwarding layer. While a new routing function is added, current network routing protocols, algorithms, and flows are not changed fundamentally, thereby maximally protecting existing network investments and smooth evolutionary upgrades.

4. Encapsulation solution of resource and service identifier.

The resource and service identifier is encapsulated in an IPv6 extension packet header, such as a destination node extension packet header DOH, and the encapsulated resource and service identifier is extended in an IPv6-based source routing extension packet header SRH.

The resource and service identifier sub-layer above the network layer encapsulates the resource and service identifier.

An SRv6 resource and service function programming is extended, i.e., the resource and service identifier is encapsulated at a Function portion in a Locator+Function structure.

The resource and service identifier is encapsulated in an Overlay extension packet header, such as NSH, GENEVE, GRE, etc.

The resource and service identifier is encapsulated in an MPLS extension header.

5. Semantic application scope of resource and service identifier.

The resource and service identifier has a global semantic. However, in an inter-cloud network node, only network entry and exit nodes are required to maintain a semantic state of the identifier and execute operations of encapsulation and de-encapsulation, such that a network intermediate node is neither required to maintain the state of the identifier nor recognize the semantics of the identifier.

6. Resource and service identifier of network control plane.

A network control plane maintains a routing state table using the resource and service identifier as a unique index, including, but not limited to, the following features.

Cloud node information providing corresponding resource and service identifiers, including a node gateway address and resource and service state data thereof; and

Instance information of the corresponding resource and service identifiers, a virtual machine address and state, and attributed cloud node information.

The identifier routing state table may be maintained at a network centralized control unit, and may also be maintained at a network routing and forwarding node through a distributed protocol, or is maintained hierarchically in different nodes under the foregoing two mixed modes according to actual deployment requirements.

7. Resource and service identifier of network forwarding plane.

A forwarding plane may select two modes.

A terminal encapsulates the resource and service identifier; the network entry and exit nodes de-encapsulate and identify the identifier semantics of the resource and service identifier, and execute corresponding routing and forwarding flows; and an encapsulation mode may select IPv6 and SRv6 extension packet headers in Clause 4 (an encapsulation solution of the resource and service identifier) in the exemplary embodiments.

The network entry node executes the encapsulation of the resource and service identifier; and the network exit node de-encapsulates the resource and service identifier, and executes the corresponding routing and forwarding flows respectively.

8. Application traffic affinity mechanism.

Since the resource and service identifier is an abstract global identifier, which corresponds to a plurality of distributed dynamic instances, traffic affinity needs to be ensured. Specifically, there are two scenarios and modes as follows.

If the network entry node executes a routing strategy to a destination identifier instance, the network entry node maintains traffic affinity forwarding table entries of an application to guide subsequent packet forwarding of the same application traffic. Specifically, 5 tuples (a source, a destination address, a source, destination port number, and transmission layer protocol type) or resource and service identifier + 5-tuple identifier application traffic may be used.

If the network entry node only executes a routing strategy to the network exit node, the traffic affinity forwarding table maintained at the network entry node is the same as A, the only difference is that a destination address is a network output interface, and in particular, the network output interface also needs to maintain the traffic affinity forwarding table same as A.

### Exemplary implementation 1

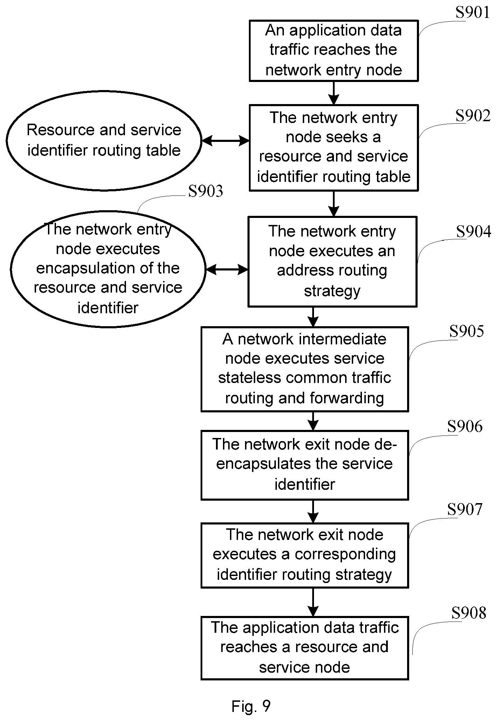

Fig. 9 is a basic routing and forwarding flowchart based on resource and service identifiers according to Exemplary implementation 1 of the present invention. As shown in Fig. 9, in this exemplary implementation, on the basis of a traditional network routing and forwarding mechanism, virtual routing based on the resource and service identifier is introduced, such that in a traditional network routing and forwarding flow, a resource and service identifier routing flow is overlaid, and a basic data forwarding flow includes the following steps.

At S901, an application data traffic reaches the network entry node.

At S902, the network entry node seeks a resource and service identifier routing table according to an application request, computes and determines resource and service nodes meeting application requirements, i.e., executes virtual resource and service identifier routing.

At S903, the network entry node executes encapsulation of the resource and service identifier.

At S904, the network entry node executes an address routing strategy according to a resource and service identifier routing strategy, and forwards the application data traffic.

At S905, a network intermediate node executes service stateless common traffic routing and forwarding.

At S906, the network exit node de-encapsulates the resource and service identifier.

At S907, the network exit node executes a corresponding identifier routing strategy according the resource and service identifier, and forwards the application data traffic.

At S908, the application data traffic reaches a resource and service node, and the flow ends.

### Exemplary implementation 2

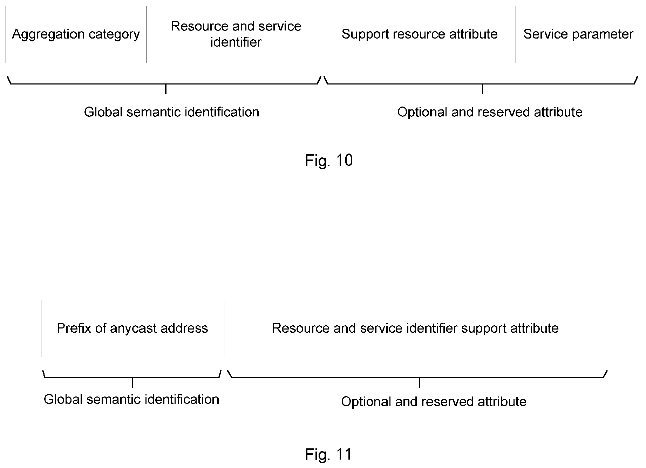

Fig. 10 is a schematic structural diagram of resource and service identifiers of a non-IP address structure according to Exemplary implementation 2 of the present invention. As shown in Fig. 10, a resource and service identifier of a non-IP address structure is encapsulated in an extension packet header as described in Clause 4 (an encapsulation solution of the resource and service identifier). Each of optional extension header encapsulation solutions is not expanded upon here. The identifier is defined using a fixed-length structured definition, which may refer to an established address length such as 32 bits for IPv4 and 128 bits for IPv6 for convenience of processing by a device chip. An aggregation category may improve the retrieval efficiency of the identifier. The resource and service identifier is a unique identifier of a specific resource or service with global semantics at a control plane and a forwarding plane of a network layer, with optional and reserved attributes reserved for extension definition purposes.

### Exemplary implementation 3

This exemplary implementation provides a resource and service identifier of an anycast address structure.

An anycast address is used as the resource and service identifier, directly following an IP address attribute of the anycast address, is directly encapsulated in a destination address field of an IP fixed packet header, i.e., giving the anycast address the dual semantics of traditional routing addresses and resource and service identifiers, the network control plane also needs to execute virtual resource and service identifier routing based on such anycast address. There are two optional solutions available for the anycast address to indicate the resource and service identifier.

One anycast address corresponds to a unique resource and service identifier, provided that this mapping definition relationship requires globally standardized, i.e., a network routing and forwarding edge device can directly identify the resource and service identifier semantics of the address.

Fig. 11 is a schematic structural diagram of resource and service identifiers of an anycast address structure according to Exemplary implementation 3 of the present invention. As shown in Fig. 11, the prefix of the anycast address is defined as the resource and service identifier, and the remaining portion is used for attribute extensions related to resources and services, such as service parameters.

It is apparent that those skilled in the art should understand that the above-mentioned modules or steps of the present invention may be implemented by a general computing device, and may also be gathered together on a single computing device or distributed in network composed of multiple computing devices. The above mentioned modules or steps of the present application may be implemented with program codes executable by the computing device, so that may be stored in a storage device for execution by the computing device, and in some cases, the steps shown or described may be performed in a different sequence than herein, or can be fabricated into individual integrated circuit modules respectively, or multiple modules or steps thereof are fabricated into a single integrated circuit module for implementation. In this way, the present invention is not limited to any specific combination of hardware and software.

The above are only the preferred embodiments of the present invention and are not intended to limit the present invention. For those skilled in the art, the present invention may have various modifications and variations. Any modifications, equivalent replacements, improvements and the like made within the principle of the present invention all fall within the scope of protection of the present invention.

## Claims

1. A routing method, comprising:
acquiring predetermined information carried in a received application data packet, wherein the predetermined information comprises a cloud resource identifier for processing a cloud resource of application data in the application data packet;
determining, according to a cloud resource identifier routing table, information about a cloud node and/or cloud resource instance corresponding to the predetermined information, wherein
the cloud resource identifier routing table uses the cloud resource identifier as an index to record the information for providing the cloud node and/or cloud resource instance of the cloud resource identified by the cloud resource identifier; and
routing and forwarding the application data packet according to the determined information about the cloud node and/or cloud resource instance.

2. The method according to claim 1, wherein the cloud resource identifier is configured for globally and uniquely identifying a class of cloud resources, and is independent of the attributions and/or positions of the cloud resources.

3. The method according to claim 2, wherein the class of the cloud resources is divided based on a cloud resource attribute; and the cloud resource attribute comprises at least one of the following: service categories of the cloud resources, service identifiers of the cloud resources, computing resources comprised in the cloud resources, storage resources comprised in the cloud resources, or interface parameters of the cloud resources.

4. The method according to claim 1, wherein the predetermined information further comprises at least one of the following:
an aggregation category, support resource attribute, and service parameter of the cloud resource.

5. The method according to claim 1, wherein the information about the cloud node comprises at least one of the following:
a gateway address of the cloud node, and cloud resource state data of the cloud node.

6. The method according to claim 1, wherein the information about the cloud resource instance comprises at least one of the following:
an address of the cloud resource instance, a state of the cloud resource instance, and
information of the cloud node to which the cloud resource instance belongs.

7. The method according to claim 1, wherein the application data packet carries the predetermined information in at least one of the following manners:
encapsulating the predetermined information in a cloud resource identifier sub-layer packet header above a network layer of the application data packet;
encapsulating the predetermined information in an Internet Protocol version 6 ,IPv6, extension packet header of the application data packet;
encapsulating the predetermined information by extending an IPv6-based Destination Option Header ,DOH, packet header of the application data packet;
programmatically encapsulating the predetermined information by extending an IPv6-based Segment Routing version 6 ,SRv6, function of the application data packet;
encapsulating the predetermined information in a tunnel protocol Overlay extension packet header of the application data packet;
encapsulating the predetermined information in a Multi-Protocol Label Switching ,MPLS, extension header of the application data packet; or
carrying an anycast address corresponding to the cloud resource identifier in a destination address field of a packet header of the application data packet, wherein the prefix of the anycast address is defined as the cloud resource identifier, or the anycast address corresponds to a unique cloud resource identifier, and a mapping relationship between the anycast address and the cloud resource identifier is globally consistent.

8. The method according to claim 1, wherein determining, according to the cloud resource identifier routing table, the information about the cloud node and/or cloud resource instance corresponding to the predetermined information comprises:
at a cloud resource identifier routing sub-layer, determining, according to the cloud resource identifier routing table, the information about the cloud node and/or cloud resource instance corresponding to the predetermined information.

9. The method according to claim 1, wherein routing and forwarding the application data packet according to the determined information about the cloud node and/or cloud resource instance comprises:
at an address routing sub-layer, routing and forwarding the application data packet according to the determined information about the cloud node and/or cloud resource instance.

10. The method according to claim 1, wherein
acquiring the predetermined information carried in the received application data packet comprises: acquiring, by a network entry node, the predetermined information carried in the received application data packet;
determining, according to the cloud resource identifier routing table, the information about the cloud node and/or cloud resource instance corresponding to the predetermined information comprises: according to the cloud resource identifier routing table, determining, by the network entry node, the information about the cloud node and/or cloud resource instance corresponding to the predetermined information; and
routing and forwarding the application data packet according to the determined information about the cloud node and/or cloud resource instance comprises: according to the determined information about the cloud node and/or cloud resource instance, determining, by the network entry node, a network edge node corresponding to the cloud node and/or cloud resource instance as a network exit node, routing and forwarding the application data packet to the network exit node, and forwarding the application data packet to the cloud node and/or cloud resource instance by the network exit node.

11. The method according to claim 10, wherein acquiring, by the network entry node, the predetermined information carried in the received application data packet comprises at least one of the following:
analyzing, by the network entry node, a packet header to acquire the predetermined information when the predetermined information is encapsulated, at a terminal sending the application data packet, in a network layer packet header of the application data packet or a cloud resource identifier sub-layer packet header above a network layer; and
deeply detecting, by the network entry node, the application data packet to acquire the predetermined information when the predetermined information is encapsulated, at the terminal sending the application data packet, in a transmission layer under the network layer of the application data packet or an application layer packet header, and encapsulating the predetermined information in the network layer packet header of the application data packet or the cloud resource identifier sub-layer packet header above the network layer.

12. The method according to claim 1, wherein
acquiring the predetermined information carried in the received application data packet comprises: acquiring, by a network exit node, the predetermined information carried in the received application data packet;
determining, according to the cloud resource identifier routing table, the information about the cloud node and/or cloud resource instance corresponding to the predetermined information comprises: according to the cloud resource identifier routing table, determining, by the network exit node, the information about the cloud resource instance corresponding to the predetermined information; and
routing and forwarding the application data packet according to the determined information about the cloud node and/or cloud resource instance comprises: forwarding, by the network exit node, the application data packet to the cloud resource instance according to the determined information about the cloud resource instance.

13. The method according to claim 12, wherein acquiring, by the network exit node, the predetermined information carried in the received application data packet comprises:
analyzing, by the network exit node, the network layer packet header of the application data packet or the cloud resource identifier sub-layer packet header above the network layer to acquire the predetermined information.

14. The method according to claim 1, wherein, when the received application data packet is the first application data packet in an application data stream to which the application data packet belongs, after determining, according to the cloud resource identifier routing table, the information about the cloud node and/or cloud resource instance corresponding to the predetermined information, the method further comprises:
recording the determined information about the cloud node and/or cloud resource instance to a traffic affinity forwarding table.

15. The method according to claim 14, wherein, when the received application data packet is not the first application data packet in the application data stream to which the application data packet belongs, the method further comprises:
determining, according to the traffic affinity forwarding table, the information about the cloud node and/or cloud resource instance corresponding to the application data stream; and
routing and forwarding the application data packet according to the determined information about the cloud node and/or cloud resource instance.

16. The method according to claim 1, further comprising at least one of the following:
maintaining the cloud resource identifier routing table at a network routing and forwarding node, wherein the network routing and forwarding node comprises a network entry node and/or network exit node of the application data packet; or
maintaining the cloud resource identifier routing table at a network centralized control unit, and synchronizing to the network routing and forwarding node regularly or based on a request, wherein the network routing and forwarding node comprises the network entry node and/or network exit node of the application data packet.

17. A cloud resource registering method, comprising:
receiving cloud resource information reported by a cloud resource providing end, wherein the cloud resource information comprises: a cloud resource identifier of a cloud resource provided, and information for providing a cloud node and/or cloud resource instance of the cloud resource; and
generating or updating a cloud resource identifier routing table according to the cloud resource information, wherein the cloud resource identifier routing table uses the cloud resource identifier as an index to record the information for providing the cloud node and/or cloud resource instance of the cloud resource identified by the cloud resource identifier.

18. The method according to claim 17, further comprising at least one of the following:
reporting the cloud resource identifier routing table to a network centralized control unit; or
flooding the cloud resource identifier routing table between network routing and forwarding nodes.

19. A routing apparatus, comprising:
a first determination module, configured to acquire predetermined information carried in a received application data packet, wherein the predetermined information comprises a cloud resource identifier configured to process a cloud resource of application data in the application data packet;
a second determination module, configured to determine, according to a cloud resource identifier routing table, information about a cloud node and/or cloud resource instance corresponding to the predetermined information, wherein the cloud resource identifier routing table uses the cloud resource identifier as an index to record the information for providing the cloud node and/or cloud resource instance of the cloud resource identified by the cloud resource identifier; and
a routing and forwarding module, configured to route and forward the application data packet according to the determined information about the cloud node and/or cloud resource instance.

20. A cloud resource registration apparatus, comprising:
a receiving module, configured to receive cloud resource information reported by a cloud resource providing end, wherein the cloud resource information comprises: a cloud resource identifier of a cloud resource provided, and information for providing a cloud node and/or cloud resource instance of the cloud resource; and
a routing table maintenance module, configured to generate or update a cloud resource identifier routing table according to the cloud resource information, wherein the cloud resource identifier routing table uses the cloud resource identifier as an index to record the information for providing the cloud node and/or cloud resource instance of the cloud resource identified by the cloud resource identifier.

21. A computer readable storage medium, wherein a computer program is stored in the computer readable storage medium , and the computer program is configured to cause, when executed by a processor, the processor to perform steps of the method as claimed in any one of claims 1 to 16, or steps of the method as claimed in any one of claims 17 to 18.

22. An electronic apparatus, comprising a memory, a processor, and a computer program that is stored in the memory and executable on the processor, wherein the processor is configured to execute the computer program to perform steps of the method as claimed in any one of claims 1 to 16, or steps of the method as claimed in any one of claims 17 to 18.
